# EUROPEAN PATENT APPLICATION

(11) **EP 3 521 025 A1**
(43) Date of publication of application: **07.08.2019**
(21) Application number: 18154499.0
(22) Date of filing: 31.01.2018
(51) Int. Cl.: B32B 43/00

(54) **APPARATUS FOR PEELING A BOTTOM LAYER, SUCH AS A RESILIENT LAYER, FROM A TOP LAYER, SUCH AS A FIBER-REINFORCED LAMINATE, AND RELATED METHOD**

(71) Applicant: SABIC Global Technologies B.V., 4612 PX Bergen op Zoom (NL)
(72) Inventor: YALDIZ, Recep, 6160 AH Geleen (NL); VERLAEK, Roel, 6160 AH Geleen (NL); MUILWIJK, Mark, 6160 AH Geleen (NL); WILMANS, Dennis, 6160 AH Geleen (NL)
(74) Representative: J A Kemp

(57) **Abstract**

This disclosure includes an apparatus (10a) for peeling a bottom layer (42), such as a resilient layer, from a top layer (38), such as a fiber-reinforced laminate, and related method.

## Description

### BACKGROUND

### 1. Field of Invention

The present invention relates generally to apparatuses for peeling one or more bottom layers (e.g., resilient layer(s)) from one or more top layers (e.g., fiber-reinforced laminates).

### 2. Description of Related Art

Fiber-reinforced laminates can be used to form structures having advantageous structural characteristics, such as high stiffnesses and high strengths, as well as relatively low weights, when compared to structures formed from conventional materials. As a result, fiber-reinforced laminates are used in a wide variety of applications across a wide range of industries, including the automotive, aerospace, and consumer electronics industries. To produce such a laminate, a stack of one or more fiber-reinforced laminae can be consolidated by applying heat and pressure to the stack.

### SUMMARY

When pressing a stack of one or more laminae to produce a laminate, the stack can be disposed on a resilient layer in order to encourage an even application of pressure to the stack and thereby promote even distributions of material (e.g., fibers and matrix material) in the laminate, an even surface finish of the laminate, and/or the like. In such a process, however, the laminate can become adhered to the resilient layer. While this presents several advantages, such as the ability to handle the laminate by handling the resilient layer (mitigating the risk of damage to the laminate during such handling), to use the laminate may require removal of the resilient layer from the laminate. If not done properly, the laminate may be damaged during such removal.

Some of the present apparatuses are configured to mitigate the risk of damage to a laminate during removal of a resilient layer from the laminate by being configured to peel the resilient layer from the laminate. Some such apparatuses include, for example, a first conveyor for conveying the laminate on the resilient layer, a second conveyor spaced from the first conveyor such that a gap is defined between the conveyors, and a gripper that is positioned to grip the resilient layer as the resilient layer moves across the gap and is movable relative to the gap to peel the gripped resilient layer from the laminate while the laminate passes across the gap.

A laminate and a resilient layer are provided to illustrate one use of the present apparatuses and methods. The present apparatuses and methods can, however, be used to peel any bottom layer from any top layer so long as the bottom layer is more flexible than the top layer. For example, a layer that is more flexible may have a lower average thickness than a layer that is less flexible. For further example, a layer that is more flexible may have a modulus of elasticity that is less than or equal to 90, 80, 70, 60, 50, 40, 30, 20, or 10% of, and/or that is one, two, or more orders of magnitude less than that of, a modulus of elasticity of a layer that is less flexible. For further example, a layer that is more flexible may be characterized as a film and/or a layer that is less flexible may be characterized as a plate.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of' what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, an apparatus or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. Each of the figures, unless identified as a schematic view, is drawn to scale, meaning the sizes of the elements depicted in the figure are accurate relative to each other for at least the embodiment depicted in the figure.
**FIG.** 1 is a schematic view of a first embodiment of the present apparatuses for peeling one or more bottom layers from one or more top layers.
**FIGs. 2A-2E** are schematic views illustrating use of the FIG. 1 apparatus to peel one or more bottom layers from one or more top layers.
**FIG. 3A** is a perspective view of a second embodiment of the present apparatuses for peeling one or more bottom layers from one or more top layers, shown without its guiding elements and with portions of its frame omitted for clarity.
**FIG. 3B** is a front view of the FIG. 3A apparatus, shown without its guiding elements for clarity.
**FIG. 3C** is a top view of the FIG. 3A apparatus.
**FIGs. 3D** and **3E** are side views of the FIG. 3A apparatus, shown without portions of its frame for clarity.
**FIGs. 4A-4D** are views illustrating use of the FIG. 3A apparatus to peel one or more bottom layers from one or more top layers.
**FIG. 5A** is a side view of a third embodiment of the present apparatuses for peeling one or more bottom layers from one or more top layers with its track and portions of its frame omitted for clarity.
**FIGs. 5B-5F** are views illustrating use of the FIG. 5A apparatus to peel one or more bottom layers from one or more top layers.

### DETAILED DESCRIPTION

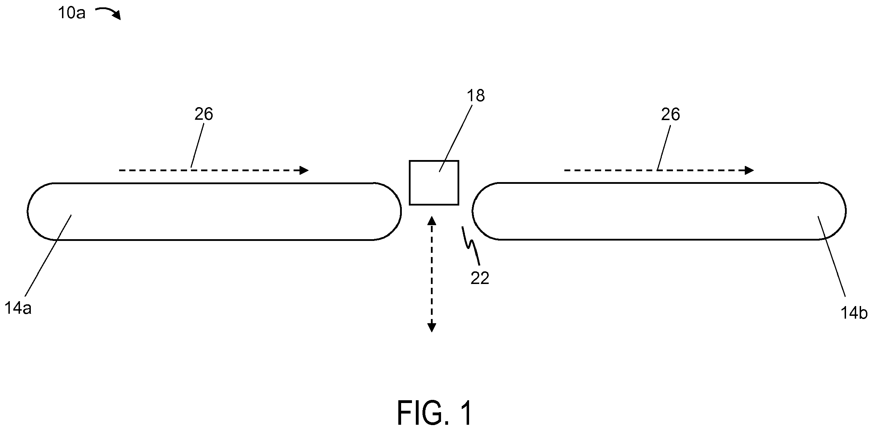

FIG. 1 is a schematic of a first embodiment 10a of the present apparatuses for peeling one or more bottom layers from one or more top layers to which they are coupled (e.g., bottom layer 42 and top layer 38, each described below). Apparatus 10a can comprise a first conveyor 14a for conveying the top and bottom layers in a first direction 26, and a second conveyor 14b that is spaced from the first conveyor in the first direction to define a gap 22 between the conveyors. To illustrate, a layer can move from first conveyor 14a and to second conveyor 14b by passing across gap 22. As shown, conveyors 14a and 14b are co-planar; for example, layers conveyed by conveyor 14a move in a first plane, and layers conveyed by conveyor 14b move in a second plane that is co-planar with the first plane. In other apparatuses, however, first and second conveyors can be inclined relative to, vertically-offset from, and/or the like one another. Conveyors 14a and 14b can each comprise any suitable conveyor, such as, for example, a belt conveyor, roller conveyor, wheel conveyor, chain conveyor, slat conveyor, or the like.

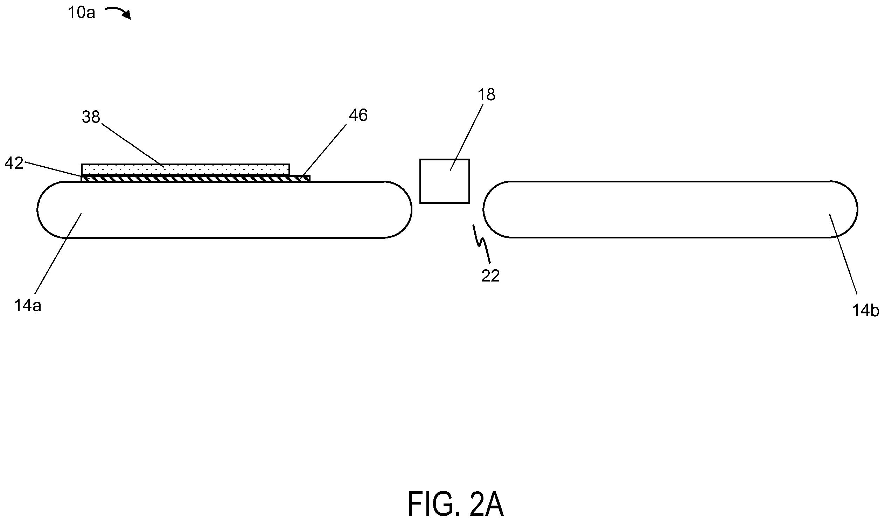

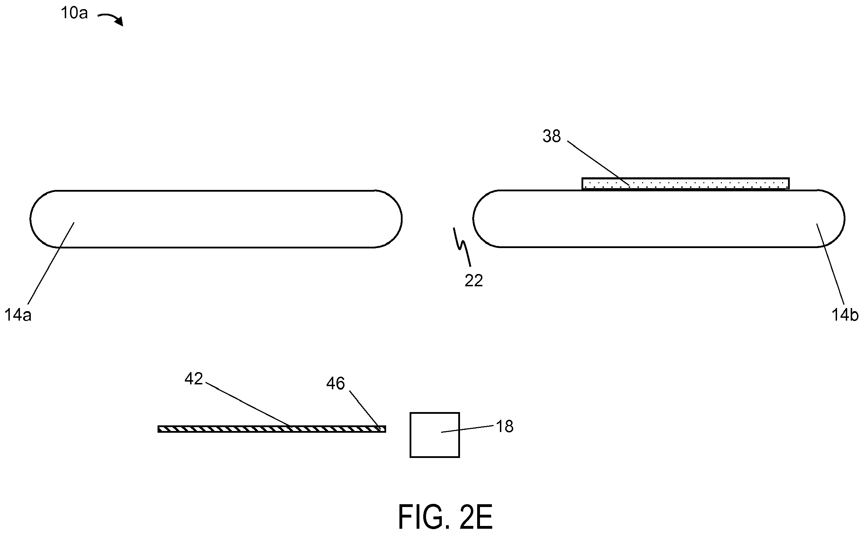

Apparatus 10a can comprise a gripper 18 that cooperates with conveyors 14a and 14b to peel the bottom layer(s) from the top layer(s). For example, when it is in a first position (FIG. 2A), gripper 18 can grip a portion of the bottom layer(s) that extends at least partially across gap 22. Gripper 18 can comprise any suitable structure for gripping the bottom layer(s), such as, for example, one or more clamps, one or more ports through which suction can be applied to the bottom layer(s), and/or the like. And, once the bottom layer(s) are gripped by gripper 18, the gripper can be moved downwardly (in some instances, also horizontally) toward a second position (FIG. 2E) while the top and bottom layers are conveyed by first conveyor 14a such that the bottom layer(s) are peeled from the top layer(s), and the top layer(s) pass across gap 22 and onto second conveyor 14b. Movement of gripper 18 between the first and second positions can be accomplished in any suitable fashion, such as, for example, via one or more tracks, chains, belts, cables, arms, and/or the like.

In FIGs. 2A-2E, apparatus 10a is used to illustrate some of the present methods for peeling one or more bottom layer(s) from one or more top layer(s). Apparatus 10a, however, is not limiting on these methods, which can be performed using any suitable apparatus (e.g., apparatuses 10b and 10c, described below).

Beginning with FIG. 2A, some methods include disposing the top layer(s) and the bottom layer(s) on a first conveyor (e.g., 14a) such that the bottom layer(s) underlie the top layer(s), and conveying the top and bottom layers along the conveyor in a first direction (e.g., 26). In instances where there are two or more bottom layers and/or two or more top layers, layers of the same type (here, type being top or bottom) can be positioned in an overlapping and/or side-by-side fashion (with or without space between them). As shown, the bottom layer(s) are oversized relative to the top layer(s) in that one or more portions (e.g., 46) of the bottom layer(s) extend beyond the top layer(s) in the first direction. Such portion(s) can facilitate gripping of the bottom layer(s) independently of the top layer(s) (described below) to peel the bottom layer(s) from the top layer(s). Nevertheless, in some methods, the bottom layer(s) may not be oversized relative to the top layer(s) in this way.

The bottom layer(s) can each comprise a resilient layer. Provided by way of illustration, a resilient layer can comprise polytetrafluoroethylene, silicon, polyimide, an elastomer, a gasket material, and/or the like. In some instances, a resilient layer can comprise fibers. And, such fibers, which can be of any type provided below, can be arranged in a woven or non-woven configuration. Such a resilient layer can have any suitable thickness, such as, for example, one that is greater than or substantially equal to any one of, or between any two of: 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 1.00, 1.10, 1.20, 1.30, 1.40, 1.50, 1.60, 1.70, 1.80, 1.90, 2.00, 2.50, or 3.00 millimeters (mm).

The top layers(s) can each comprise a fiber-reinforced laminate. A fiber-reinforced laminate can include one or more fiber-reinforced laminae, each having fibers dispersed within a matrix material. Such fibers can comprise, for example, carbon fibers, glass fibers, aramid fibers, polyethylene fibers, polyester fibers, polyamide fibers, ceramic fibers, basalt fibers, steel fibers, and/or the like. And, such a matrix material can comprise a thermoplastic or thermoset matrix material. Provided by way of illustration, a thermoplastic matrix material can include polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. A thermoset matrix material can include, for example, an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof.

Such a fiber-reinforced laminate can have any suitable thickness, such as, for example, one that is greater than or substantially equal to any one of, or between any two of: 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, or 2.5 mm (e.g., approximately 2.00, 1.75, 1.50, or 1.25 mm).

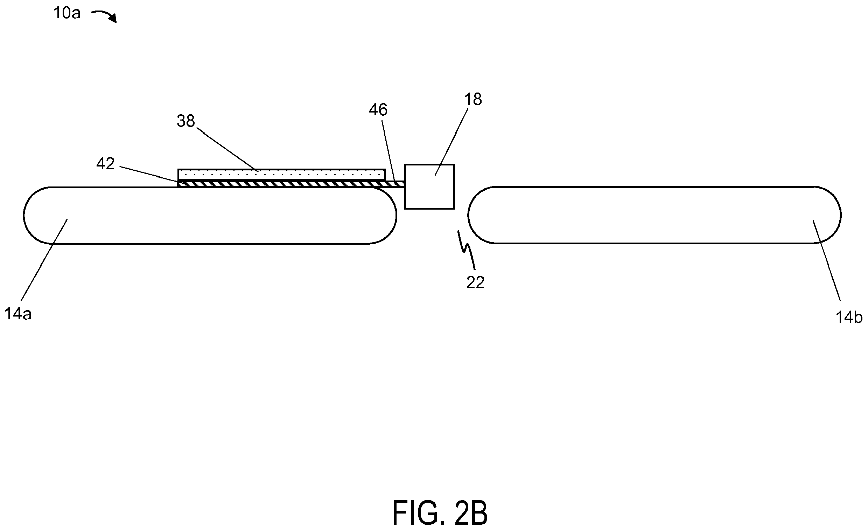

Turning now to FIG. 2B, in some methods, the top and bottom layers are conveyed toward a gap (e.g., 22) defined between the first conveyor and a second conveyor (e.g., 14b) that is spaced from the first conveyor in the first direction such that the bottom layer(s) (e.g., one or more portions 46 thereof) extend at least partially across the gap. With the bottom layer(s) so positioned, a gripper (e.g., 18) located within the gap can be used to grip the bottom layer(s). To illustrate, if the bottom layer(s) are oversized relative to the top layer(s) as described above, the gripper can grip the portion(s) of the bottom layer(s) that extend beyond the top layer(s) with one or more clamps that intercept and clamp those portions. To further illustrate, the gripper can grip the bottom layer(s) by applying suction to the bottom layer(s) through one or more ports (whether or not the bottom layer(s) have completely crossed the gap and whether or not the bottom layer(s) are oversized relative to the top layer(s) as described above).

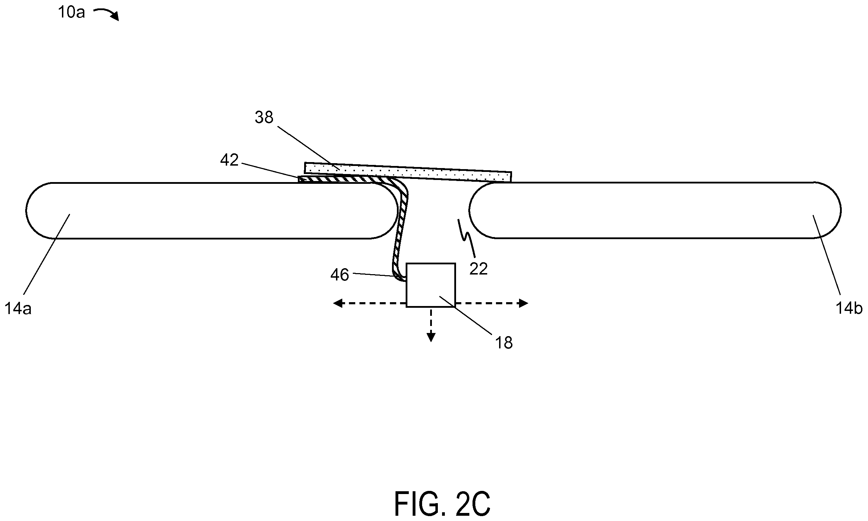

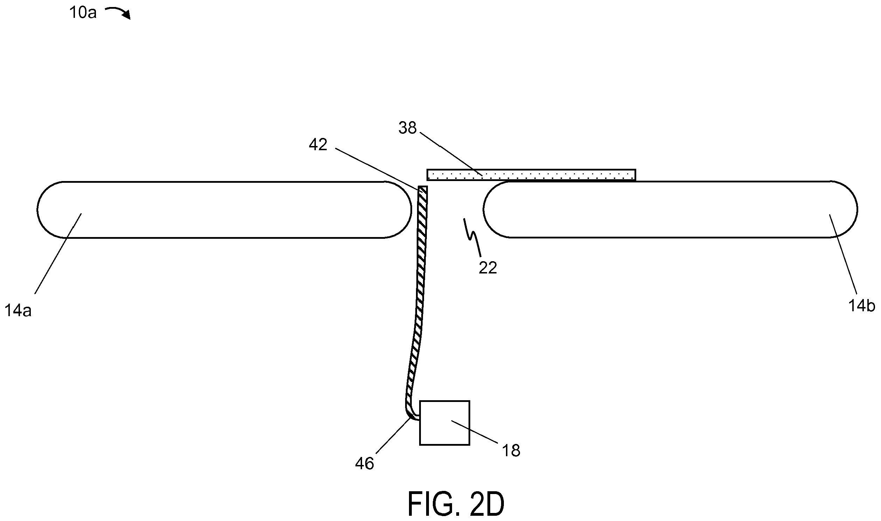

In some methods, once the bottom layer(s) are gripped by the gripper, the gripper is moved downwardly (in some instances, also horizontally) relative to the first and second conveyors while the top and bottom layers are conveyed by the first conveyor to peel the bottom layer(s) from the top layer(s) (FIGs. 2C and 2D). The bottom layer(s) can be pulled through the gap by the gripper. And, the top layer(s)-not being gripped by the gripper-pass across the gap and onto the second conveyor. The top layer(s) are thus supported on opposing sides of the gap as the bottom layer(s) are peeled therefrom, reducing the risk of damage to the top layer(s). Further support for the top layer(s) can be provided in the form of one or more guiding elements (e.g., 70, described below) that are disposed above at least one of the conveyors and contact the top layer(s) to restrict pitching thereof into the gap.

Referring now to FIG. 2E, in some methods, the gripper can release the bottom layer(s) once they are peeled from the top layer(s). The bottom layer(s) can then be re-used, disposed of, or the like. In some methods, before releasing the bottom layer(s), the gripper can be moved horizontally to, for example, facilitate laying of the bottom layer(s) on a tray, conveyor, or the like (e.g., tray 50 or conveyor 14c, each described below).

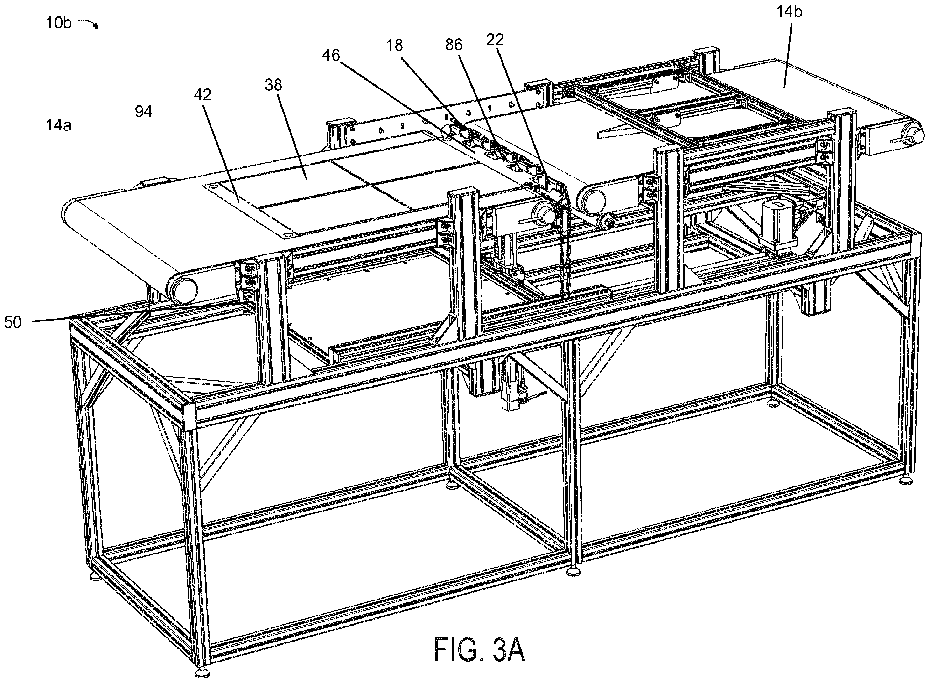

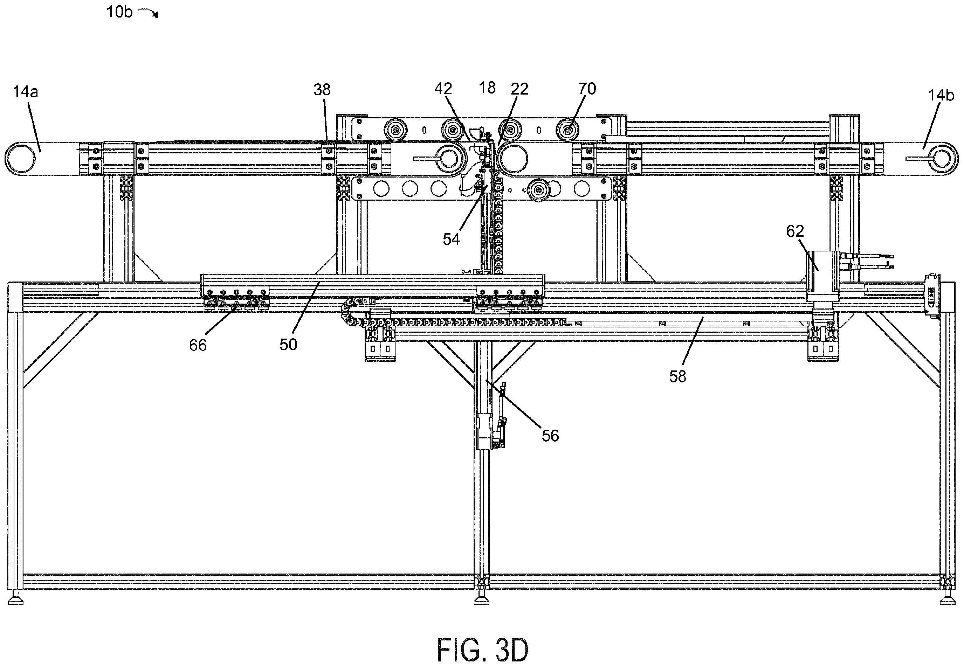

FIGs. 3A-3E depict a second embodiment 10b of the present apparatuses, which is a version of apparatus 10a that includes apparatus 10a's features-first and second conveyors 14a and 14b and gripper 18-as well as several additional features that are detailed below; these additional features may or may not be present in other versions of apparatus 10a.

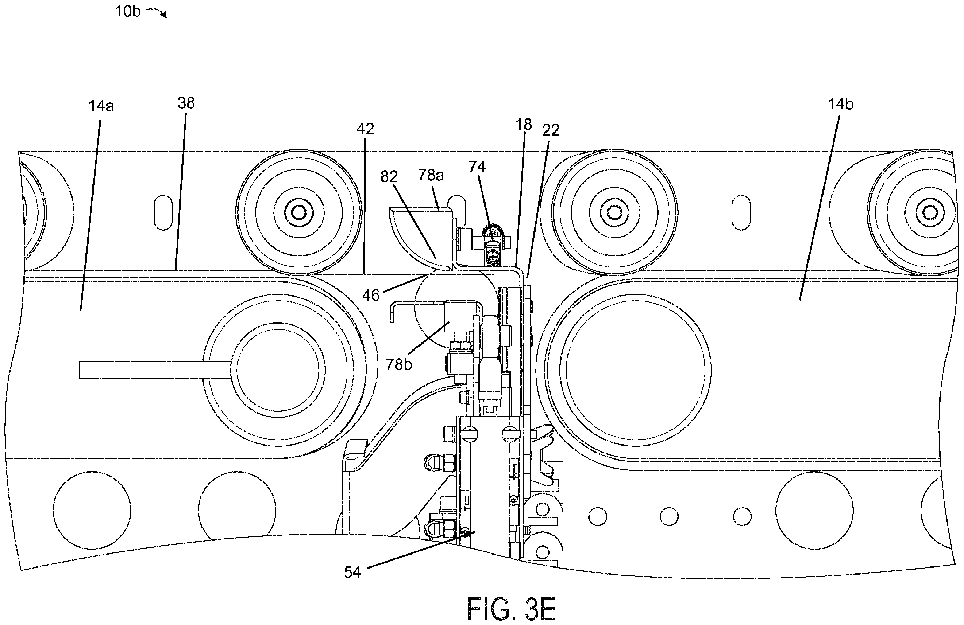

In apparatus 10b, gripper 18 includes one or more clamps 74 (FIG. 3E) for gripping the bottom layer(s); for clarity, the features of one of clamp(s) 74 are described below, however, these features may be present for other(s) of the clamp(s). Clamp 74 can include a first clamp member 78a and a second clamp member 78b that are movable relative to one another to reduce a distance between the clamp members and thereby grip the bottom layer(s) when the bottom layer(s) are received between the clamp members. To facilitate receipt of the bottom layer(s) between clamp members 78a and 78b, at least one of the clamp members can include a guide 82 positioned closer to first conveyor 14a than is the clamping surface of the clamp member, the guide having a surface (e.g., an arcuate surface) for contacting and directing the bottom layer(s) to a position between the clamp members.

To permit its vertical movement relative to first and second conveyors 14a and 14b, gripper 18 can be coupled to an extendable end 54 of a linear actuator 56. Further, actuator 56-and thus gripper 18-can be horizontally movable relative to the conveyors. To illustrate, apparatus 10b includes horizontal rails 58 that are disposed beneath the conveyors and to which actuator 56 is slidably coupled. Movement of actuator 56 along rails(s) 58 can be accomplished in any suitable fashion, such as, for example, via a motor 62.

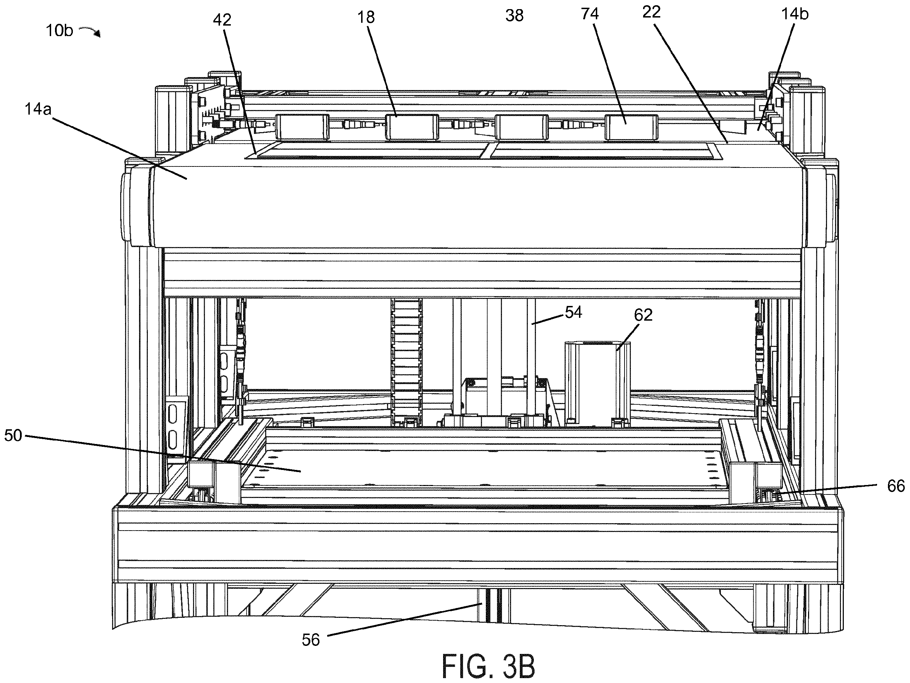

Apparatus 10b can include a tray 50 (best seen in FIG. 3B) for receiving the bottom layer(s) as and/or after the bottom layer(s) are peeled from the top layer(s). To illustrate, tray 50 can be positioned both in front of gripper 18 (so that the tray extends from the gripper in a direction that is opposite to the first direction) and below the gripper. And, tray 50 can be coupled to gripper 18 such that horizontal movement of the gripper causes horizontal movement of the tray. In these ways, when the bottom layer(s) are gripped by the gripper, horizontal movement of the gripper lays the bottom layer(s) out onto tray 50.

Apparatus 10b can have one or more guiding elements 70 (not shown in FIGs. 3A and 3B) for supporting the top layer(s) as the bottom layer(s) are peeled therefrom. For example, guiding element(s) 70 can each be disposed above one of first and second conveyors 14a and 14b such that the guiding element contacts the top layer(s) as the top layer(s) are passed across gap 22, thereby restricting pitching of the top layer(s) into the gap. Such guiding element(s) can comprise, for example, one or more rollers, pins, and/or plates.

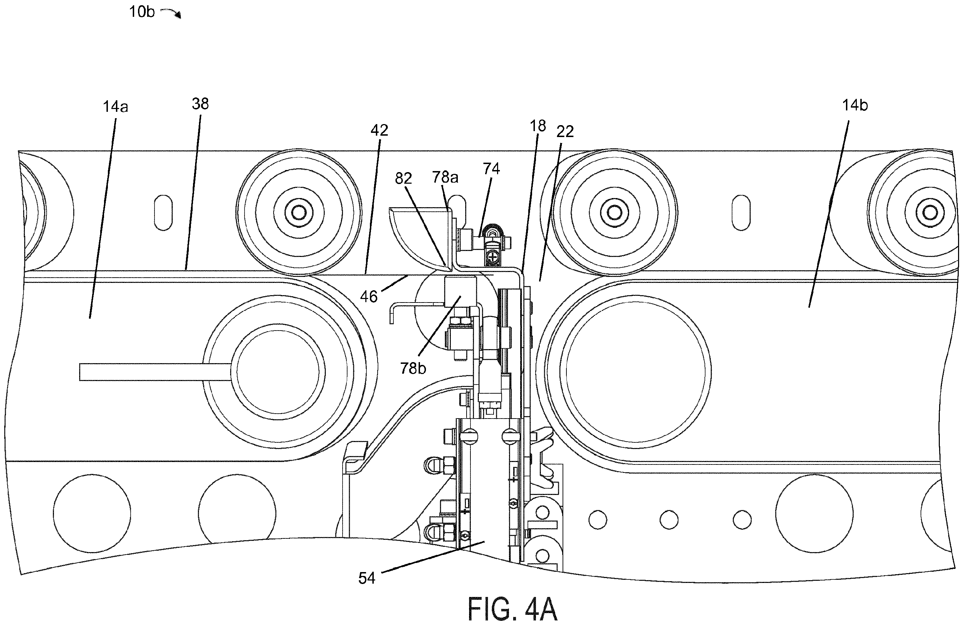

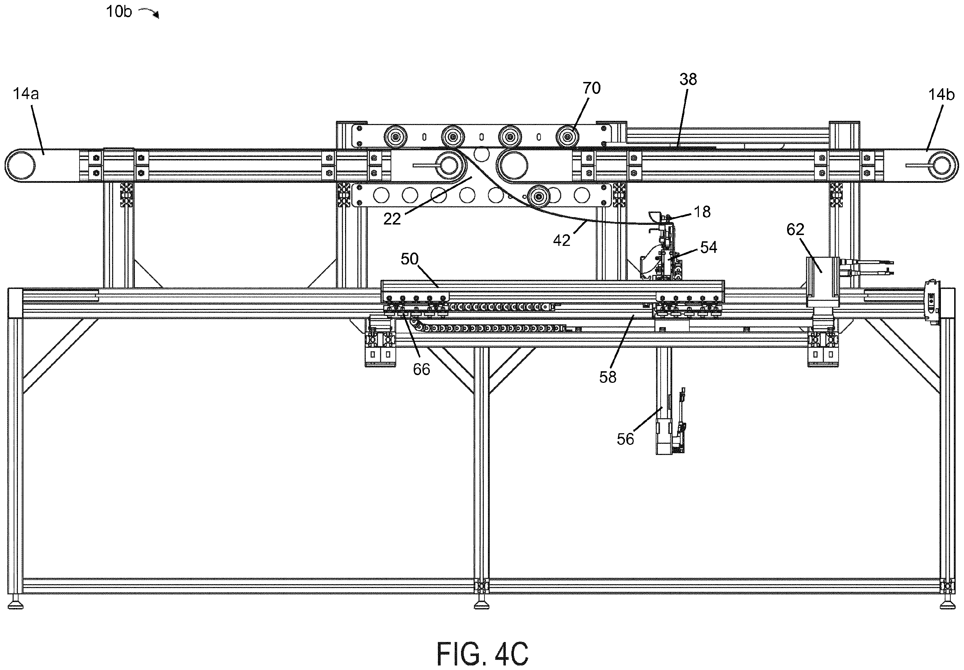

FIGs. 4A-4F show use of apparatus 10b-or a similar apparatus-to peel one or more bottom layers (e.g., 46) from one or more top layers (e.g., 38). The following steps are additive to or further describe (in a non-limiting fashion) the steps described above with respect to apparatus 10a. To begin, gripper 18 can be positioned within gap 22 so that, as the top and bottom layers are conveyed along first conveyor 14a, clamp(s) 74 intercept and receive, between their clamp members 78 and 78b, portion(s) of the bottom layer(s) that extend beyond the top layer(s) (e.g., portion(s) 46, such as protrusion(s) 86 shown in FIG. 3A). Once those portion(s) are so received, they can be clamped by moving each of the clamp(s) clamp members 78a and 78b relative to one another (FIG. 4A). This position of gripper 18 is sometimes referred to as its first position.

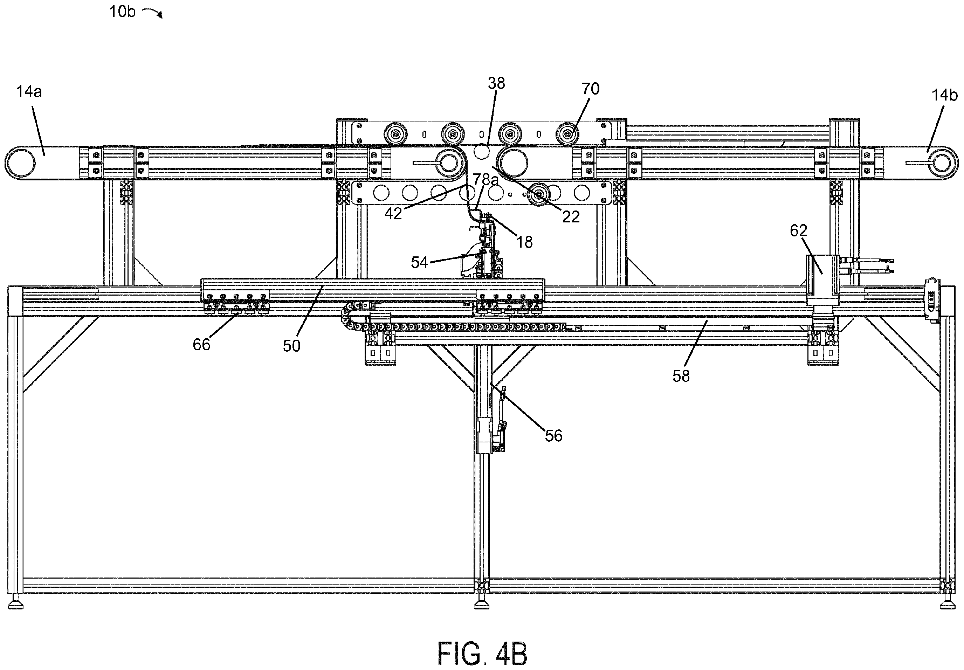

With the bottom layer(s) gripped by gripper 18, the gripper is moved downwardly and horizontally relative to first and second conveyors 14a and 14b while the top and bottom layers are conveyed by the first conveyor to peel the bottom layer(s) from the top layer(s). Such movement of gripper 18 can be performed in two stages. First, gripper 18 can be moved relative to the conveyors in a direction that is more downward than horizontal from the first position and to an intermediate position (FIG. 4B). Such movement can be accomplished by, for example, retracting extendable end 54 of actuator 56 by a distance that is greater than a distance that actuator 56 is moved-if at all-along rail(s) 58. In addition to moving gripper 18 out of gap 22 to permit passage of the top layer(s) across the gap, such movement can promote separation of the bottom layer(s) from the top layer(s). Gripper 18 can, but need not, stop in the intermediate position.

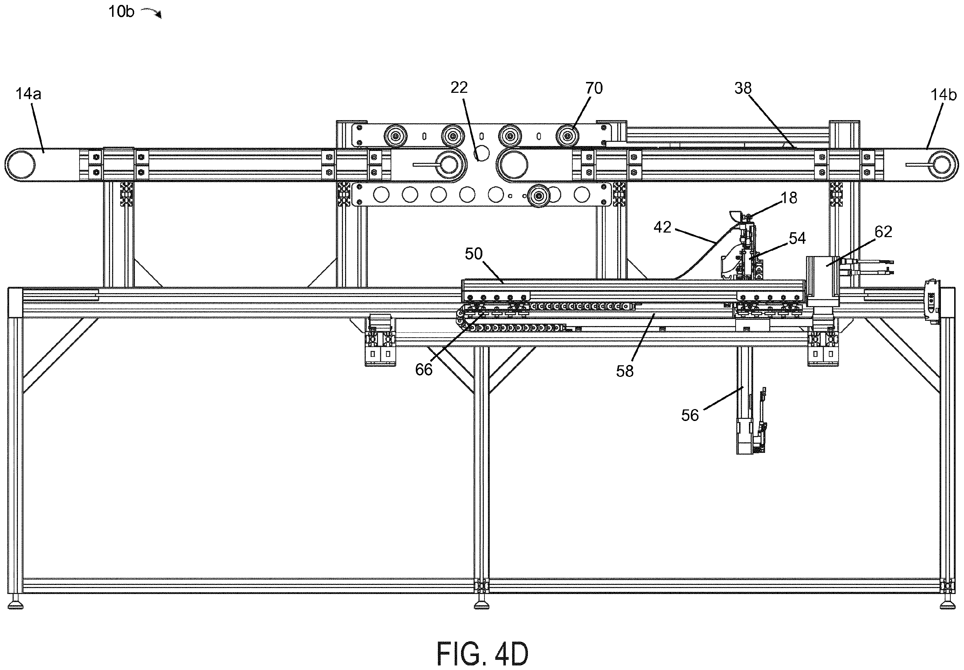

Gripper 18 can then be moved relative to the conveyors in a direction that is more horizontal than downward from the intermediate position and to a second position (FIG. 4D). Similarly to as described above, such movement can be accomplished by moving actuator 56 along rail(s) 58 by a distance that is greater than a distance that extendable end 54 of actuator 56 is retracted (if at all). The distance that gripper 18 moves from the intermediate position and to the second position can be greater than the distance that the gripper moves from the first position and to the intermediate position. As shown in FIG. 4D, due to such horizontal movement of gripper 18, the bottom layer(s) can be laid out onto tray 50, and, once released by the gripper, collected for re-use, disposal, or the like.

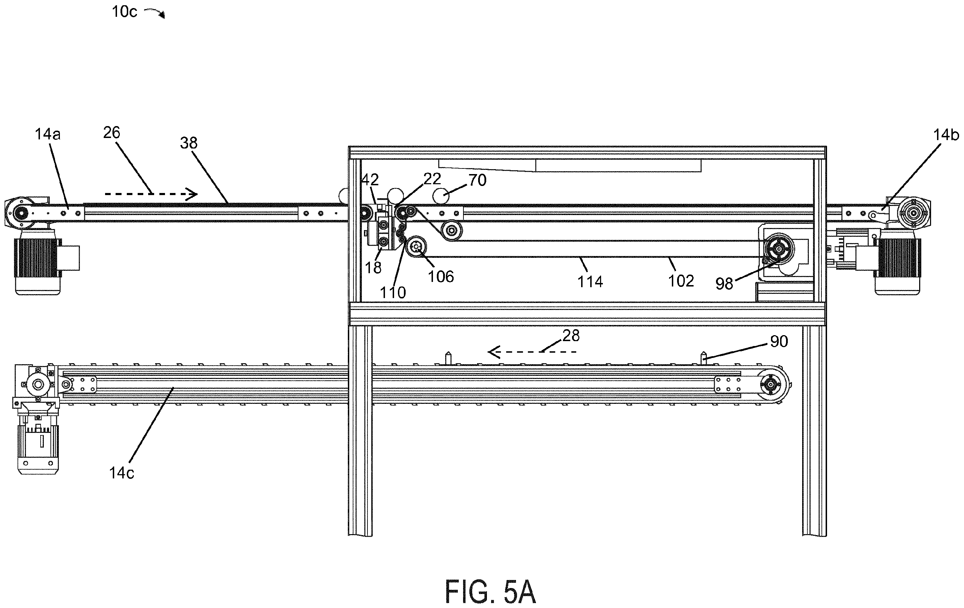

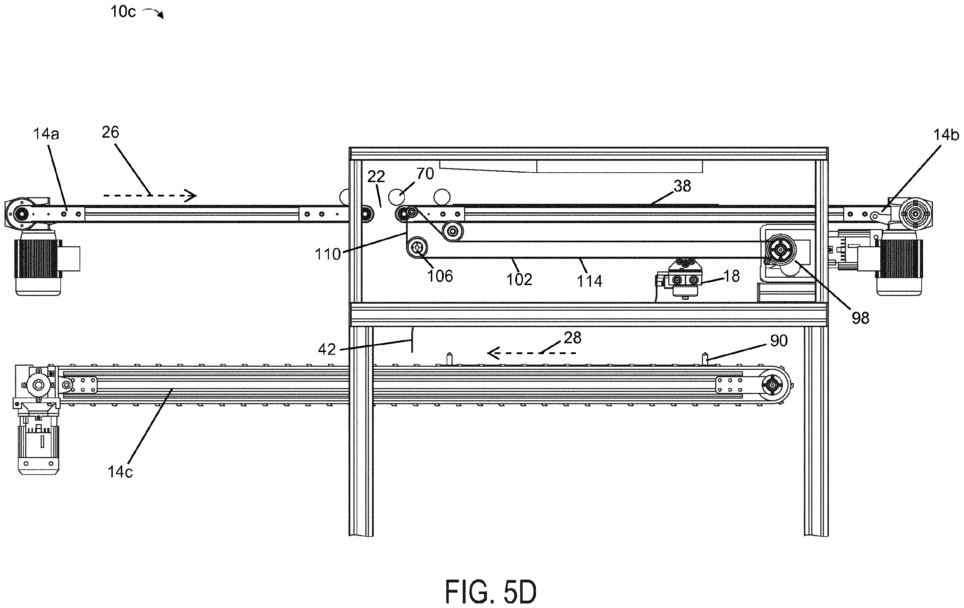

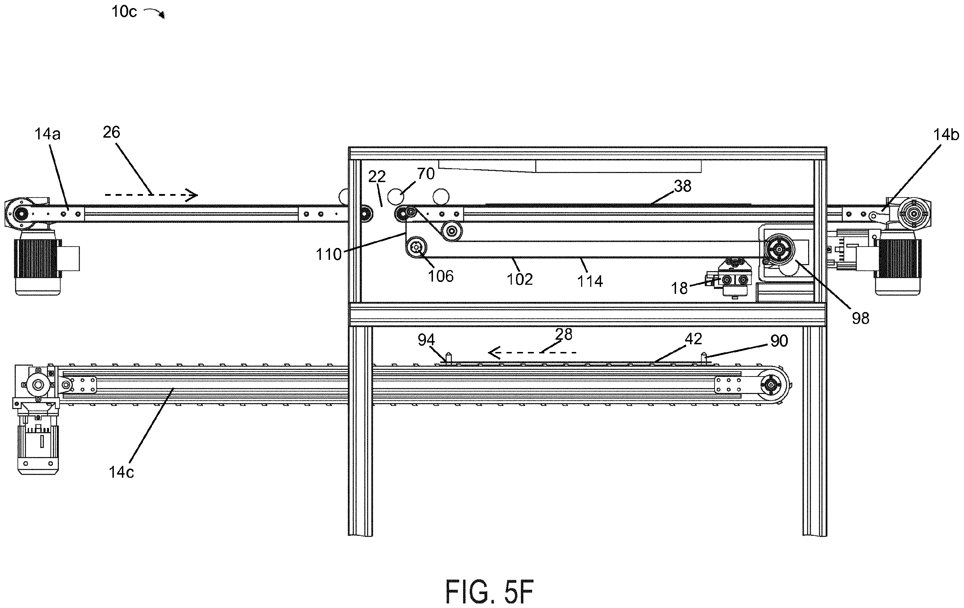

FIGs. 5A-5F depict a third embodiment 10c of the present apparatuses. Apparatus 10c is substantially similar to apparatus 10b, with the primary exceptions described below. In apparatus 10c, gripper 18 is movable relative to first and second conveyors 14a and 14b along a track 122. Track 122 can comprise any suitable track, and gripper 18 can be coupled to the track in any suitable fashion; for example, the track can define a groove, and the gripper can be coupled to the track via one or more rollers 118 that are disposed within the groove. Apparatus 10c can include a panel 126 coupled to its frame and to which track 122 is coupled to support the track relative to the frame.

Track 122 can include a vertically-oriented portion along which gripper 18 is movable more downwardly than horizontally, and a horizontally-oriented portion along which the gripper is movable more horizontally than downwardly. The vertically- and horizontally-oriented portions of track 122 can be arranged such that, as gripper 18 moves from its first position (e.g., within gap 22) and toward its second position (e.g., furthest from gap 22), the gripper moves along the vertically-oriented portion before moving along the horizontally-oriented portion. And, the horizontally-oriented portion can be longer than the vertically-oriented portion. Via the depicted coupling between gripper 18 and track 122, the gripper will rotate about an axis that is perpendicular to first direction 26 (e.g., by an angle of approximately 90 degrees) as the gripper moves from the vertically-oriented portion to the horizontally-oriented portion (e.g., along curved track portion 130).

Movement of gripper 18 along track 122 can be accomplished in any suitable fashion. For example, apparatus 10c includes a belt 102, a portion of which is fixedly coupled to gripper 18 such that movement of the belt moves the gripper along track 122. Belt 102, via being disposed around guiding elements 106 (e.g., rollers, pulleys, pins, plates, and/or the like), can be moved in a direction that is more vertical than horizontal (e.g., as shown for belt portions 110) to move gripper 18 along the vertically-oriented portion of track 122 and can be moved in a direction that is more horizontal than vertical (e.g., as shown for belt portions 114) to move the gripper along the horizontally-oriented portion of the track. Movement of belt 102-and thus gripper 18-can be performed using a motor 98.

Apparatus 10c can include a third conveyor 14c positioned below first and second conveyors 14a and 14b for receiving the bottom layer(s) after the bottom layer(s) are peeled from the top layer(s). More particularly, the third conveyor can be positioned such that, when the bottom layer(s) are gripped by gripper 18, the gripper can be moved horizontally (e.g., along the horizontally-oriented portion of track 122) to align the bottom layer(s) with the third conveyor, and, when the gripper releases the bottom layer(s), the bottom layer(s) fall and rest on the third conveyor. The third conveyor can then convey the bottom layer(s) (e.g., in second direction 28) for re-use, disposal, or the like.

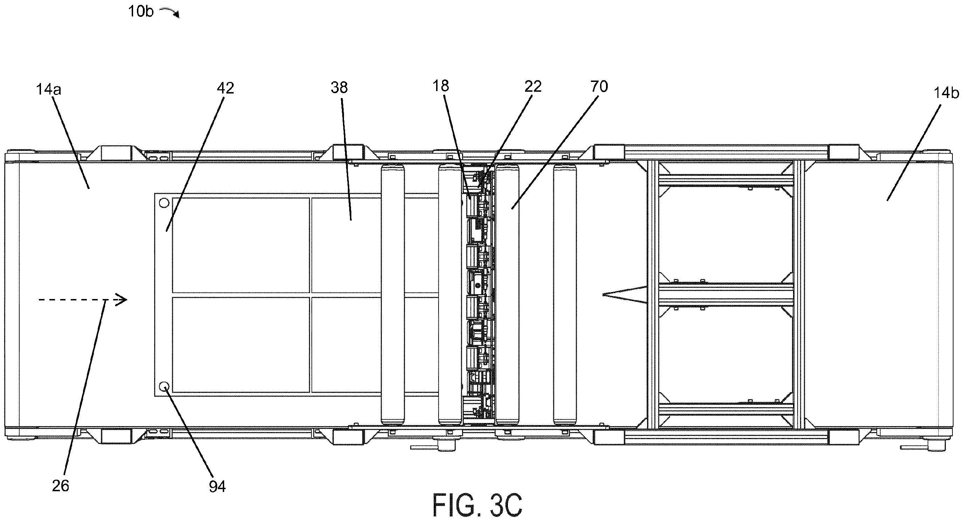

As shown, third conveyor 14c can include one or more upwardly extending protrusions 90 configured to be received by one or more openings (e.g., 94, shown in FIGs. 3A and 3C) of the bottom layer(s) to secure the bottom layer(s) relative to the third conveyor. Third conveyor 14c can comprise any suitable conveyor, including any conveyor described above.

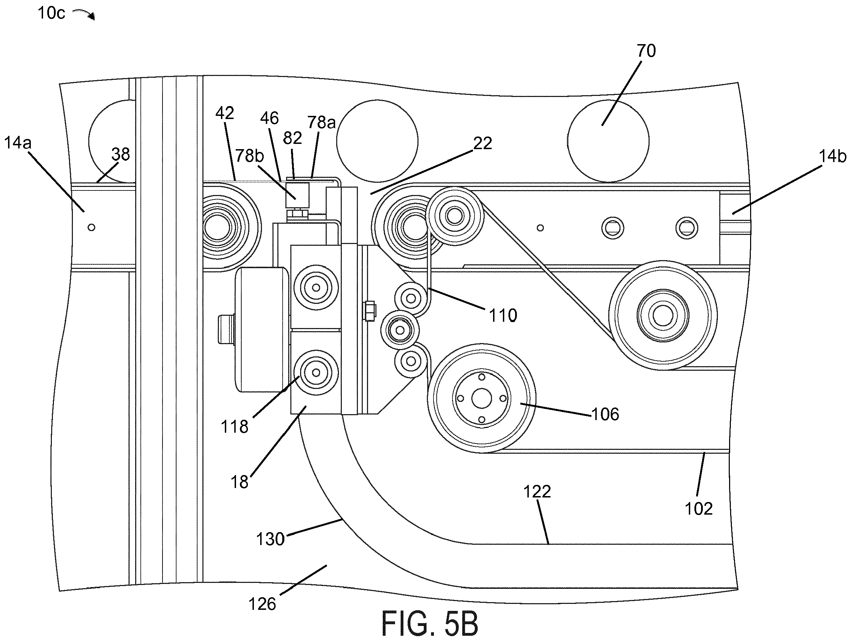

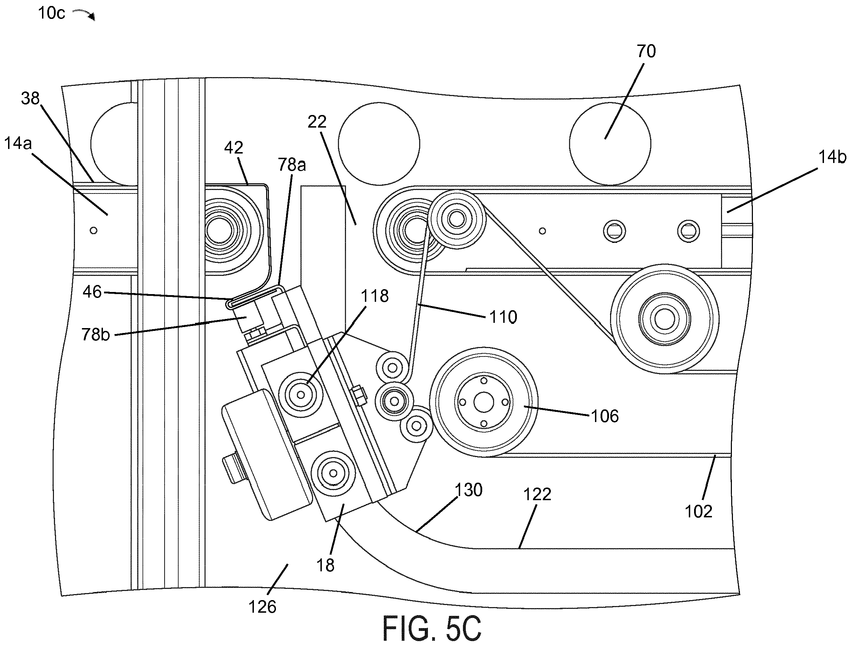

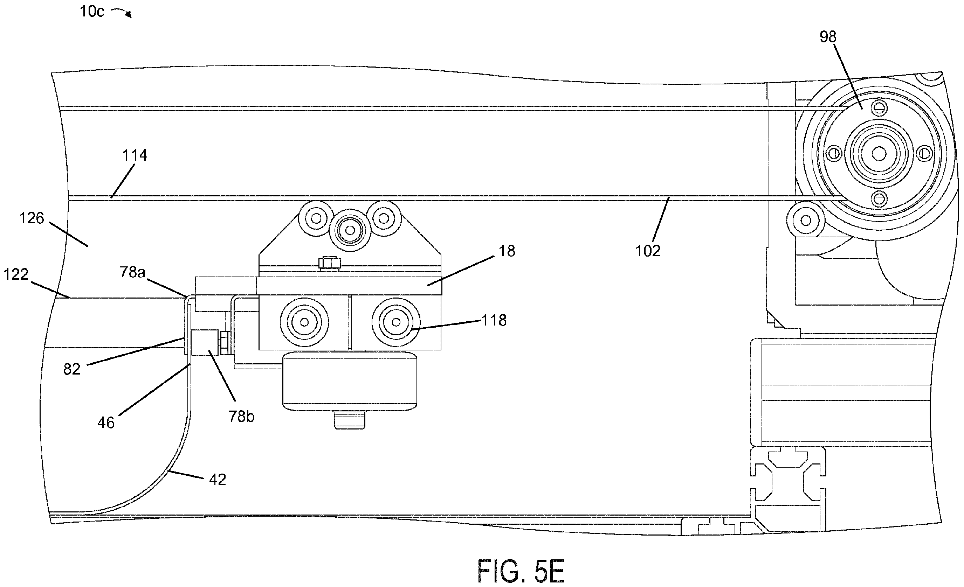

Using apparatus 10c to peel one or more bottom layers (e.g., 46) from one or more top layers (e.g., 38)-an example of which is shown in FIGs. 5A-5F-can be substantially similar to as described with respect to apparatus 10b; the primary exceptions are described below. In apparatus 10c, moving gripper 18 from the first position to the intermediate position can be performed by moving the gripper along the vertically-oriented portion of track 122 (FIG. 5B), and moving the gripper from the intermediate position to the second position can be performed by moving the gripper along the horizontally-oriented portion of the track (FIG. 5E). As described above, movement of gripper 18 between these track portions (e.g., across curved track portion 130, FIG. 5C) causes rotation of the gripper. Such rotation can facilitate placement of the bottom layer(s) onto third conveyor 14c, by, for example, orienting the gripper such that it is not positioned between the bottom layer(s) and third conveyor 14c when the bottom layer(s) are released (FIG 5E).

Some of the present apparatuses for peeling a bottom layer from a top layer that is coupled to the bottom layer comprise: a first conveyor configured to convey the layers in a first direction, a second conveyor that is spaced from the first conveyor in the first direction to define a gap between the first and second conveyors, and a gripper that is downwardly movable relative to the first and second conveyors: (1) from a first position in which the gripper is positioned within the gap and is configured to grip a portion of the bottom layer when that portion extends at least partially across the gap; and (2) toward a second position in which the gripper is farther from the gap than when the gripper is in the first position, wherein the apparatus is configured such that, when the bottom layer is gripped by the gripper, the layers are conveyed along the first conveyor, and the gripper is moved from the first position and toward the second position, the bottom layer is peeled from the top layer while the top layer is passed across the gap and onto the second conveyor. In some apparatuses, each of the first and second conveyors comprises a belt conveyor.

Some apparatuses comprise one or more guiding elements disposed above at least one of the first and second conveyors, the guiding element(s) configured to contact the top layer to restrict pitching of the top layer into the gap as the top layer passes across the gap. In some apparatuses, the guiding element(s) comprise one or more rolls, pins, and/or plates.

In some apparatuses, the gripper includes one or more clamps, each having first and second clamp members, wherein the clamp members are movable relative to one another to reduce a distance between the clamp members and thereby grip the bottom layer when the bottom layer is received between the clamp members.

In some apparatuses, when the gripper is in the second position, the gripper is disposed farther from the gap in a horizontal direction than in a downward direction. In some apparatuses, when the gripper is in the second position, the gripper is rotated relative to when the gripper is in the first position about a horizontal axis that is perpendicular to the first direction and by an angle of approximately 90 degrees.

Some apparatuses comprise a track along which the gripper is movable between the first and second positions, the track including a first portion along which the gripper is movable more downwardly than horizontally from the first position and to an intermediate position that is between the first and second positions, and a second portion along which the gripper is movable more horizontally than downwardly from the intermediate position and toward the second position, wherein the second portion is longer than the first portion.

Some apparatuses comprise a third conveyor positioned below the first and second conveyors, the third conveyor configured to receive the bottom layer from the gripper when the gripper is in the second position.

Some of the present methods for peeling a bottom layer from a top layer that is coupled to the bottom layer comprise: conveying the layers along a first conveyor in a first direction such that the bottom layer at least partially extends across a gap defined between the first conveyor and a second conveyor that is spaced from the first conveyor in the first direction, gripping a portion of the bottom layer with a gripper that is disposed within the gap, and moving the gripper downwardly relative to the first and second conveyors while conveying the layers along the first conveyor such that the bottom layer is peeled from the top layer, and the top layer passes across the gap and onto the second conveyor. In some methods, the portion of the bottom layer gripped by the gripper is a portion of the bottom layer that, when the layers are conveyed along the first conveyor, extends beyond the top layer in the first direction. In some methods, each of the first and second conveyors comprises a belt conveyor.

Some methods comprise contacting the top layer with one or more guiding elements while the top layer passes across the gap to restrict pitching of the top layer into the gap, wherein, optionally, the guiding element(s) comprise one or more rollers, pins, and/or plates.

In some methods, the gripper comprises one or more clamps, each having first and second clamp members, and gripping the portion of the bottom layer comprises, for each of the clamps, moving the clamp members relative to one another to grip the portion of the bottom layer between the clamp members.

Some methods comprise laying the bottom layer onto a third conveyor that is positioned below the first and second conveyors at least by moving the gripper horizontally relative to the first and second conveyors. In some methods, laying the bottom layer is performed at least by rotating the gripper about a horizontal axis that is perpendicular to the first direction and by an angle of approximately 90 degrees.

In some methods, the bottom layer comprises a resilient layer, and the top layer comprises a fiber-reinforced laminate. In some methods, the resilient layer comprises polytetrafluoroethylene, silicon, and/or polyimide. In some methods, the bottom layer has a thickness that is less than approximately 3.0 mm. In some methods, the top layer has a thickness that is less than approximately 2.0 mm.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and apparatuses are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. An apparatus for peeling a bottom layer from a top layer that is coupled to the bottom layer, the apparatus comprising:
a first conveyor configured to convey the layers in a first direction;
a second conveyor that is spaced from the first conveyor in the first direction to define a gap between the first and second conveyors; and
a gripper that is downwardly movable relative to the first and second conveyors:
from a first position in which the gripper is positioned within the gap and is configured to grip a portion of the bottom layer when that portion extends at least partially across the gap; and
toward a second position in which the gripper is farther from the gap than when the gripper is in the first position;
wherein the apparatus is configured such that, when the bottom layer is gripped by the gripper, the layers are conveyed along the first conveyor, and the gripper is moved from the first position and toward the second position, the bottom layer is peeled from the top layer while the top layer is passed across the gap and onto the second conveyor.

2. The apparatus of claim 1, wherein, when the gripper is in the second position, the gripper is disposed farther from the gap in a horizontal direction than in a downward direction.

3. The apparatus of claim 1 or 2, wherein, when the gripper is in the second position, the gripper is rotated relative to when the gripper is in the first position:
about a horizontal axis that is perpendicular to the first direction; and
by an angle of approximately 90 degrees.

4. The apparatus of any of claims 1-3, comprising:
one or more guiding elements disposed above at least one of the first and second conveyors, the guiding element(s) configured to contact the top layer to restrict pitching of the top layer into the gap as the top layer passes across the gap;
wherein, optionally, the guiding element(s) comprise one or more rollers, pins, and/or plates.

5. The apparatus of any of claims 1-4, wherein the gripper includes one or more clamps, each having:
first and second clamp members;
wherein the clamp members are movable relative to one another to reduce a distance between the clamp members and thereby grip the bottom layer when the bottom layer is received between the clamp members.

6. A method for peeling a bottom layer from a top layer that is coupled to the bottom layer, the method comprising:
conveying the layers along a first conveyor in a first direction such that the bottom layer at least partially extends across a gap defined between the first conveyor and a second conveyor that is spaced from the first conveyor in the first direction;
gripping a portion of the bottom layer with a gripper that is disposed within the gap; and
moving the gripper downwardly relative to the first and second conveyors while conveying the layers along the first conveyor such that:
the bottom layer is peeled from the top layer; and
the top layer passes across the gap and onto the second conveyor.

7. The method of claim 6, wherein:
the bottom layer comprises a resilient layer; and
the top layer comprises a fiber-reinforced laminate.

8. The method of claim 7, wherein the resilient layer comprises polytetrafluoroethylene, silicon, and/or polyimide.

9. The method of any of claims 6-8, wherein the bottom layer has a thickness that is less than approximately 3.0 millimeters (mm).

10. The method of any of claims 6-9, wherein the top layer has a thickness that is less than approximately 2.0 mm.

11. The method of any of claims 6-10, wherein the portion of the bottom layer gripped by the gripper is a portion of the bottom layer that, when the layers are conveyed along the first conveyor, extends beyond the top layer in the first direction.

12. The method of any of claims 6-11, comprising laying the bottom layer onto a third conveyor or a tray that is positioned below the first and second conveyors at least by moving the gripper horizontally relative to the first and second conveyors.

13. The method of claim 12, wherein laying the bottom layer is performed at least by rotating the gripper:
about a horizontal axis that is perpendicular to the first direction; and
by an angle of approximately 90 degrees.

14. The method of any of claims 6-13, comprising:
contacting the top of the top layer with one or more guiding elements while the top layer passes across the gap to restrict pitching of the top layer into the gap;
wherein, optionally, the guiding element(s) comprise one or more rollers, pins, and/or plates.

15. The method of any of claims 6-14, wherein:
the gripper comprises one or more clamps, each having first and second clamp members; and
gripping the portion of the bottom layer comprises, for each of the clamps, moving the clamp members relative to one another to grip the portion of the bottom layer between the clamp members.
